Europäisches Patentamt

**European Patent Office**

**Office européen des brevets**

(19)

(11) Publication number: **0 170 735**
A1

# EUROPEAN PATENT APPLICATION

(12)

(21) Application number: **84304307.6**

(22) Date of filing: **26.06.84**

(51) Int. Cl.⁴: **B 28 C 7/08,** B 65 G 65/06,
B 65 G 65/38

---

(43) Date of publication of application: **12.02.86**
**Bulletin 86/7**

(71) Applicant: **J. & P. MOORE (HOLDINGS) LIMITED,**
**Queens House Don Road, St. Helier Jersey Channel**
**Islands (GB)**

(72) Inventor: **Moore, James, "Romany" Single Street, Biggin**
**Hill Kent TN16 3AA (GB)**

(84) Designated Contracting States: **AT BE CH DE FR GB IT**
**LI LU NL SE**

(74) Representative: **Stephens, Michael John, M.J. Stephens**
**& Co. 46 Tavistock Place, Plymouth PL4 8AX (GB)**

---

(54) **Skip discharge unit.**

(57) A unit for discharging material such as aggregate from a vehicle-transportable skip (10) has a support structure carrying a drag-scoop device (12, 13) which includes a drag scoop (12) and power-operated means (9) operable to draw the scoop towards the support structure across the surface of the material (11) in the skip (10) to displace material from the skip into for example, a mixer (3). The drag scoop (12) can be returned to its starting position by the actuator means (5).

EP 0 170 735 A1

- 1 -

## SKIP DISCHARGE UNIT

The present invention  relates to a skip discharge unit and, in particular, but not exclusively to a unit for discharging discrete quantities  of aggregate from a skip into the mixing drum of a concrete mixer.

Generally aggregate is dumped by lorry in large piles on building sites and has to be manually loaded into concrete mixers as and when required.

A more convenient method of delivery and storage of aggregate would be to use vehicle-transportable skips which are nowadays frequently used for the removal of building rubble.

One difficulty with the use of skips to deliver and store aggregate (or, indeed, any material) is the inconvenience involved in removing aggregate from the skip as it is required.  It is therefore an object of the present invention to provide means facilitating the discharge of material such as aggregate from a skip.

According to one aspect of the present invention, there is provided a skip discharge unit for discharging material from a vehicle-transportable skip, characterised in that the discharge unit comprises a support structure positioned adjacent one end of the skip, a support arm projecting from the support, and a power-driven conveyor or scoop device carried by the arm and operative to displace material towards the said one end of the skip and to discharge the material from the skip at said one end.

The support arm is preferably pivoted about a horizontal axis on the support structure at the said one end of the skip.

In one embodiment of the invention the power-driven conveyor or scoop device comprises an endless conveyor carried by the pivoted arm and passing around an idle pulley at the free end of the arm, the conveyor being provided with scoops or buckets which are driven around an endless path in operation of the conveyor, the arm resting under its own weight on material in the skip so that the inclination of the arm to the horizontal is determined by the level of the material in the skip.

The provision of a conveyor or scoop device in juxtaposition to a skip facilitates the use of the skip for the storage and delivery of aggregate, particularly where the discharge device is associated with a concrete mixer. Thus in a preferred embodiment of the invention the conveyor or scoop device discharges into a mixer drum carried by the support structure at the said one end of the skip.

In another aspect the present invention provides a skip discharge unit for discharging material from a vehicle-transportable skip, characterised in that the discharge unit comprises a support structure positioned adjacent one end of the skip, a drag scoop device carried by the support structure and power-operated means operable to drive the scoop device to displace material towards the said one end of the skip and to discharge the material from the skip, the power-operated means being further operable to return the drag scoop to a starting position at the opposite end of the skip from the support structure. Preferably, this return movement is effected with the scoop clear of working engagement with the material in the skip.

In one embodiment of the invention the drag scoop device includes an extendable arm one end of which carries the drag scoop and the other end of which is pivotally connected to said support structure, the power-operated means including a first actuator for selectively extending and contracting the arm and a second actuator for selectively raising the arm, the change in length of the arm between its fully contracted and fully extending conditions being approximately equal to the length of the skip to be discharged. In order to discharge material from the skip, the second actuator means is operated to raise the arm, and thus the drag scoop, clear of the material in the skip; next, the first actuator means is operated to extend the arm out across the skip whereafter the second actuator means is de-activated to allow the drag scoop to rest on the surface of the aggregate under the action of gravity; the first actuator means is then operated to contract the arm and draw the drag scoop across the material surface as a result of which a quantity of material is dragged out of the skip. The foregoing cycle of operation is repeated as often as is necessary.

The actuator means may comprise hydraulic or pneumatic rams while the arm may be a lazytongs or pantograph linkage or any other suitable extendable mechanism. Furthermore, in order to prevent the drag scoop from burying itself in the material as it is drawn back across the skip, the scoop can be provided with surface-riding skids. Alternatively, the drag scoop may be provided with guide rollers or wheels on opposite lateral ends of the scoop for rolling on the surface of the material or on the lateral walls of the skip to prevent the drag scoop from burying itself in the material as it is drawn through the latter.

In a preferred embodiment of the invention the power-operated means include an extendable arm to which the scoop is pivotally attached for pivotal movement about a horizontal axis, the scoop pivoting into a downwardly projecting operative position upon engagement with the material as the scoop is drawn through the latter and pivoting freely into an inoperative position upon return movement of the scoop. The downward pivoting of the scoop into its operative position may be limited by stop means. The arm may be extendable and retractable by cables or chains which are movable by means of a double-acting fluid-pressure actuator, the cables or chains passing over a pulley system which magnifies the movement of the actuator.

One major use envisaged for the discharge unit is as part of a concrete (or mortar) mixer unit, the drag scoop being arranged to deliver aggregate to a discharge channel from where it passes into
the mixer drum.

The broad concept behind the skip discharge unit
can be extended to cover the discharge of material
from any storage bin. Accordingly, in another
aspect the present invention provides a material
discharge unit for discharging material from a
storage bin, said unit comprises a discharge channel,
and a drag scoop device for transferring material
into the discharge channel from the storage bin,
the drag-scoop device including a drag scoop, and
power-operated means for drawing the scoop towards
the discharge channel across the surface of material
held in the bin notwithstanding variations in the
level of said surface.

In a further aspect the present invention also
provides a concrete or mortar mixer unit suitable
for loading from a skip by means of a skip discharge
unit, the mixer unit comprising a mixing chamber
having a substantially vertical loading position
with its open end uppermost and pivotable from the
loading position about a horizontal axis by actuator
means operable to oscillate the chamber about the
said axis, the chamber having internal vanes between
which the material to be mixed passes upon oscillation
of the chamber. The mixing chamber is preferably
of a generally rectangular cross-section with
its longer sides parallel to the axis of oscillation,
the vanes extending longitudinally of the chamber.

The actuator means preferably comprise a fluid pressure actuator pivotally connected to the mixing chamber below the horizontal axis of oscillation thereof, the actuator being so arranged that upon making an extended stroke it causes pivotal movement of the chamber about the said horizontal axis to locate the open end of the chamber lower than the closed end thereof, for discharging the mixing chamber.

Various other novel aspects and features of the invention will become apparent from the following description, given by way of example, with reference to the accompanying drawings, in which:

Figure 1 is a side elevation of a concrete mixer showing a skip discharge unit according to one embodiment of the invention fully extended over a skip;

Figure 2 is a side elevation of the discharge unit of Figure 1 with its arm in a fully-contracted state;

Figure 3 is an end view of the arm of the discharge unit of Figure 1;

Figure 4 is a diagrammatic side elevational view of a skip discharge unit according to another embodiment of the invention;

Figure 5 is a diagrammatic perspective view of a concrete mixer unit in accordance with the invention, for use with the skip discharge unit shown in Figure 4, shown in its loading position;

Figure 6 is a diagrammatic side elevational view of the concrete mixer unit shown in Figure 5, in its discharge position, and

Figures 7 and 8 are cut-away side and plan views respectively of a skip discharge unit according to a further embodiment of the invention.

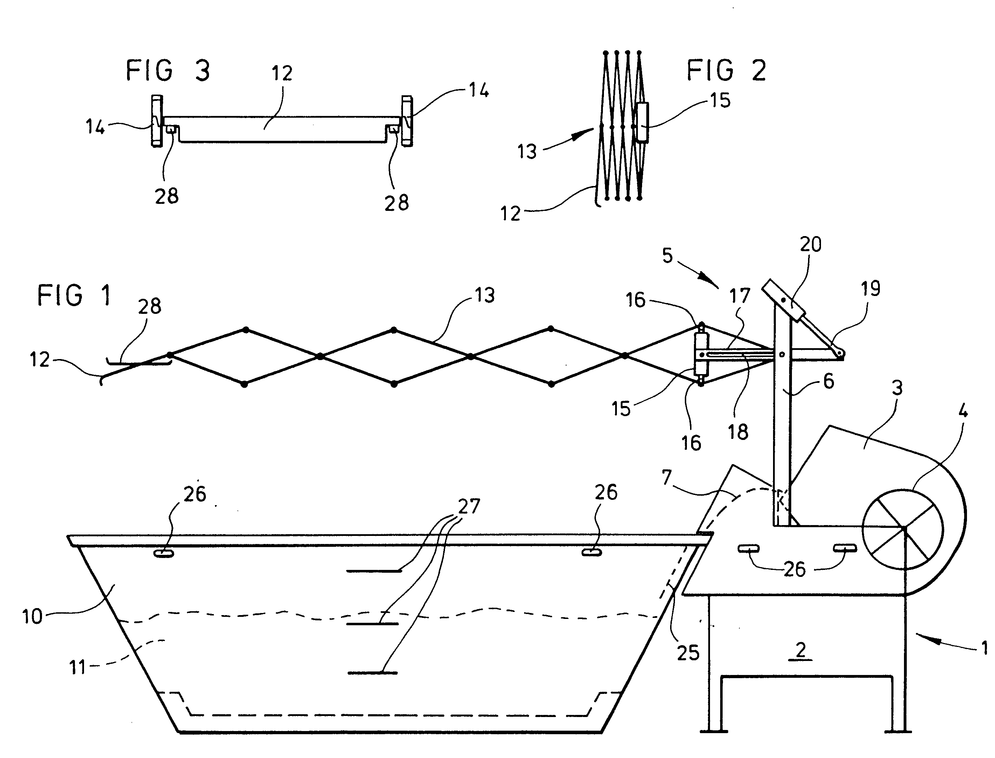

Shown in Figure 1 is a concrete mixer the main components of which are a base structure 1 including a water tank 2, a motorised mixing drum 3 tiltable about a horizontal axis by means of a hand wheel 4, and a skip discharge unit 5 carried on two posts 6 rigid with the base structure 1.

Juxtaposed the concrete mixer is a skip 10 containing aggregate 11.

The mixing drum 3 is shown in a position ready to receive aggregate delivered along a discharge channel 7 (shown dashed) defined by the base structure 1. The purpose of the discharge unit 5 is to transfer discrete quantities of aggregate 11 out of the skip 10 and into the discharge channel 7 whereby to effect loading of the drum 3 with a required quantity of aggregate.

The skip discharge unit 5 is constituted by a drag-scoop device comprising a drag scoop 12 and power-operated means for displacing the scoop 12 across the surface of aggregate 11 held in the skip 10. The power-operated means comprise an extendable arm 13 in the form of two, parallel,pivoted pantograph-type linkages 14 arranged on respective sides of the drag scoop 12 (see Fig. 3), each linkage being expandable and contractable by the selective operation of a respective first hydraulic ram device. In
the present example, each first ram device 15 is
a double-acting piston-cylinder arrangement including
two piston rods 16 arranged to move in synchronism
in opposite directions to extend or contract the
corresponding linkage 14.

The two first ram devices 15 are controlled to
operate in synchronism to move the arm 13 between
an extended state (see Figure 1) and a contracted
state (see Figure 2).

Each first ram device 15 is carried at one end
of a respective bar 17 which is pivoted intermediate
its ends to a respective one of the posts 6. Each
bar 17 is formed with a guideway 18 for guiding
the sliding movement of the rear pivot pin of the
corresponding linkage 14, that is, the pivot pin
furthest from the drag scoop 12.

The end of each bar 17 furthest from the corresponding
first ram device 15 is pivotally connected to the
piston rod 19 of a respective second ram device 20
the body of which is pivotally mounted on the upper
end of the corresponding post 6. Each second ram
device 20 is a single-acting, single piston, device
which when operated serves to raise the corresponding
linkage 14 to a horizontal position (as shown in
Figure 1). Like the first ram devices 15, the second
ram devices 20 are controlled to operate in synchronism.

Operation of the skip discharge unit 5 will now
be described starting from the condition in which
the arm 13 is contracted and the second ram devices 20 are de-activated. In this condition, the scoop 12 lies in the mouth of the channel 7, the bars 17 having pivoted out of their horizontal positions shown in Figure 1 under the effect of the weight of the arm 13 and scoop 12 (the ram devices 20 being open circuited and providing no opposition to this pivoting).

In order to draw in a charge of aggregate 11, the ram devices 20 are first activated to raise the bars 17, and thus the arm 13, to horizontal positions. Thereafter, the ram devices 15 are activated to draw in the piston rods 16 and expand the linkages 14; as a result, the arm 13 is extended to move the scoop 12 to the end of the skip 10 remote from the channel 7.

Next, the ram devices 20 are de-activated to allow the scoop 12 to drop down onto the surface of the aggregate 11. The ram devices 15 are now operated to push out the piston rods 16 and thereby contract the arm 13. As a result, the scoop 12 is dragged towards the channel 7 across the surface of the aggregate in the skip and, in the process, entrain a charge of aggregate which is drawn up the channel 7 into the mixing drum 3 during the final stage of contraction of the arm 13.

The cycle of operation described above is repeated as many times as required. Control of the ram devices 15, 20, can be effected either manually or automatically as appropriate.

It will be appreciated that the described drag

- 10 -

scoop device will operate satisfactorily regardless of the level of aggregate 11 in the skip 10.

To facilitate the drawing out of the aggregate from the skip 10 into the channel 7, the base structure 1 of the concrete mixer can be provided with a fold-down metal apron 25 which can be folded down into the skip 10 once the latter has been correctly positioned next to the concrete mixer (or vice versa). Furthermore, the scoop 12 can, with advantage, be provided with skids 28 arranged to ride on the surface of the aggregate 11 whereby to prevent the scoop 12 burying itself into the aggregate.

In addition to the standard provision of lifting-chain lugs 26 on the skip 10, the base structure 1 of the mixer is preferably also provided with such lugs to enable the mixer to be transported in the same manner as the skip 10. Furthermore, the skip is preferably formed with level marks 27 to facilitate the delivery of desired amounts of aggregate to a building site.

Various modifications to the described skip discharge unit are, of course, possible. Thus for example, the skip discharge unit could be made separate from the mixing drum and associated components of the concrete mixer; this would permit the discharge unit to be used to unload aggregate directly into a wheelbarrow or other means for transporting aggregate around a building site.

0170735

- 11 -

The skip discharge unit could, for example, be associated with a vehicle-mounted skip for delivering material such as grit or salt _via_ a chute or slide to a rotary spreader device for road gritting.

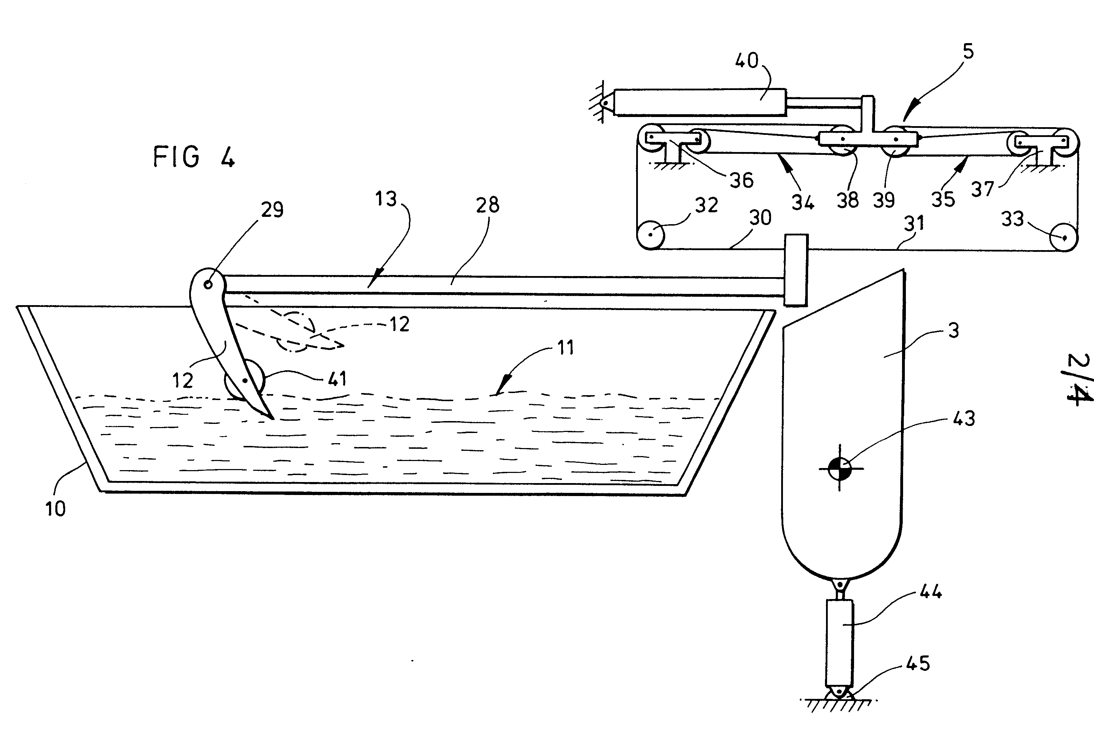

Other forms of power-operated means for the drag-scoop device can be employed. One practical alternative to the unit illustrated in Figures 1 to 3 is shown diagrammatically in Figure 4. In place of the pantograph or lazytongs linkages 14 the extendable arm 13 comprises two longitudinally displaceable horizontal booms 28 the free ends of which are interconnected by and support the drag scoop 12. In this embodiment the drag scoop 12 is pivotally connected to the booms 28 for pivotal movement about a horizontal transverse axis 29.

The booms 28 are movable by means of two cables 30, 31 anchored to the ends of the booms 28 opposite the scoop 12 and extending in opposite directions parallel to the booms 28. Each cable 30, 31 passes around a respective fixed pulley 32, 33 and thence to a respective pulley system 34, 35. Each pulley system 34, 35 comprises a twin-sheeve fixed pulley 36, 37 respectively and a single-sheeve movable pulley 38, 39 respectively, the two movable pulleys 38, 39 being interconnected and attached to the piston rod of a double-acting hydraulic actuator 40. The two pulley systems have a motion-magnifying effect, so that the displacement of the booms 28 is greater than the stroke of the actuator by a factor equal to the velocity ratio of each pulley system 34, 35 (in this case, three).

Upon extension of the actuators 40, that is, displacement to the right as viewed in Figure 4, the booms 28 are displaced to the left by the cables 30,causing an outward or return movement of the arm 13 and the drag scoop 12 towards the end of the skip 10 remote from the discharge unit 5. During this movement the drag scoop 12 pivots freely about its pivotal axis 29 into an inoperative position, shown in broken outline in Figure 4, riding over the surface of material 11 in the skip 10. Upon retraction of the actuators 40 the booms 28 are drawn to the right by the cables 31, to effect a working stroke of the arm 13. During this stroke the drag scoop 12 pivots into a downwardly projecting operative position, shown by unbroken lines, upon engagement with the material 11 in the skip 10, scooping the material towards one end of the latter, and into a mixing chamber 3.

The depth of penetration of the scoop 12 into the material 11 is limited by rollers 41 on each lateral side of the scoop 12 which roll on the surface of the material in the skip 10. Stops (not shown) limit the downward pivotal movement of the scoop 12 to determine the maximum depth of penetration of the latter. As the scoop 12 reaches the end of its working stroke the rollers 41 ride over the surface of the material 11 and over the inclined end wall of the skip 10, discharging the material into the mixing chamber 3.

0170735

- 13 -

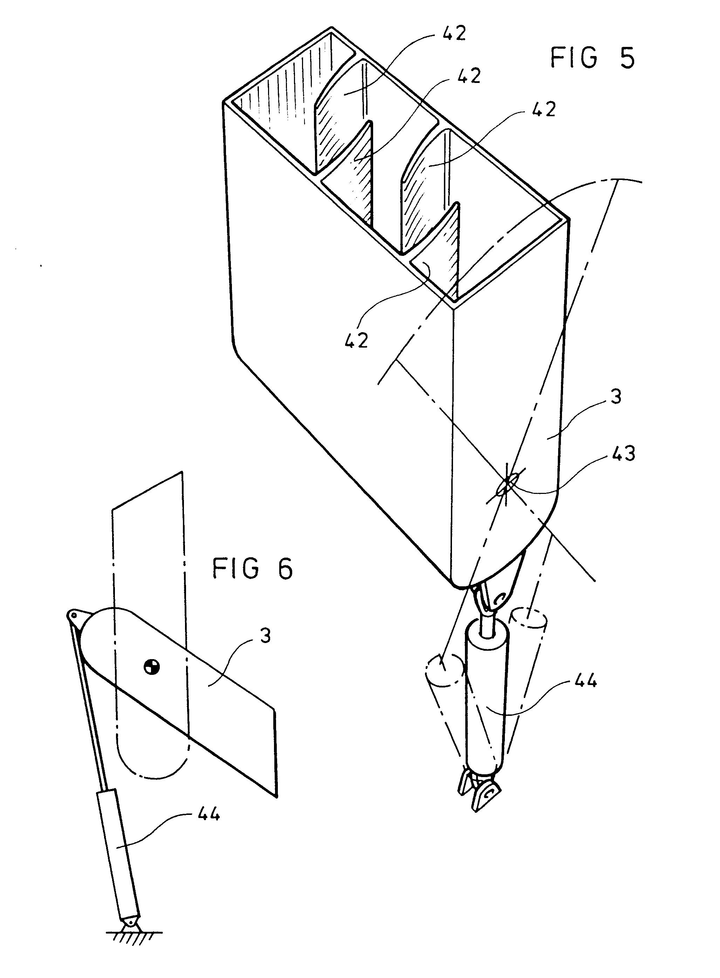

The mixing chamber 3, which is shown separately in Figure 5, has an elongate flat shape to keep the total space taken up by the mixer as small as possible. In the loading position, shown in Figures 4 and 5, the chamber 3 is substantially vertical with its open end uppermost. The chamber 3 is of generally rectangular cross section with its longer sides extending generally parallel to the adjacent edge of the skip 10 from which the chamber 3 is loaded. The mixing chamber 3 is provided with a number of internal parallel vanes 42 extending longitudinally of the chamber 3.

The mixing chamber 3 is pivotable about a horizontal transverse axis 43 by means of an hydraulic actuator 44 pivotally connected to the lower end of the chamber 3, below the pivot axis 43, the lower end of the actuator 44 being pivotally connected to a fixed anchorage 45. A mechanical selector cam arrangement (not shown) of any suitable type is associated with the actuator 44 to ensure that alternate extensions of the actuator 44 cause the latter to pivot about its anchorage 45 in alternate directions, so that successive extensions and retract-ions of the actuator 44 cause oscillatory movement of the chamber 3 about the axis 43. This oscillatory movement, the limits of which are indicated by broken lines in Figure 5, causes the material in the chamber to flow between the vanes 42, ensuring thorough mixing of the material.

- 14 -

Upon completion of a period of such oscillatory movement the actuator 44 makes an extended stroke (Figure 6) to rotate the chamber 3 about the axis 43 such as to invert the chamber and discharge the mixed material therefrom.

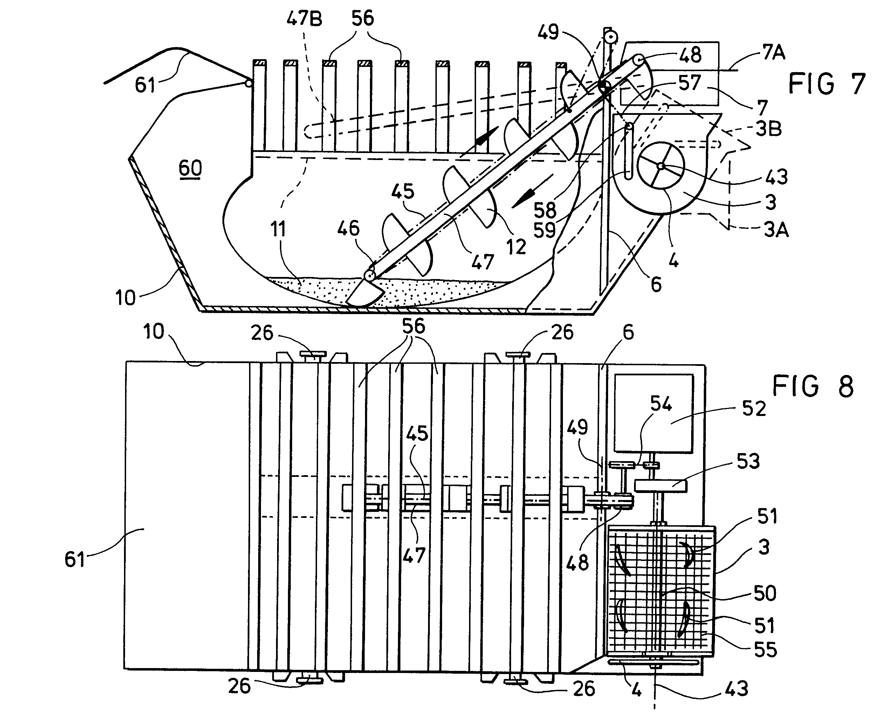

Figures 7 and 8 illustrate a further embodiment of the invention, in which the same reference numerals have been used to designate the same or corresponding component parts. In the embodiment of Figures 7 and 8 a conveyor device is provided in place of the drag scoop device of the earlier described embodiments for discharging material, in this example, aggregate for concrete-making, from a skip 10.

The conveyor device comprises endless conveyor chains 45 carrying buckets or scoops 12 spaced at regular intervals. The conveyor chains 45 pass around idle pulleys 46 at the free end of a support arm 47 and around drive sprockets 48 at the other end of the arm 47. The arm projects over the skip 10 from a support structure 6 at one end of the skip, the support structure 6 being in this case a part of the skip itself. The support arm 47 is pivoted on the support structure 6 about a horizontal pivot axis 49 located at one end of the skip 10 above the level of the material 11 therein.

A discharge chute 7 is carried by the support structure 6 adjacent the discharge end of the scoop conveyor and conducts material discharged from the conveyor into a mixing drum 3 located at the one end of the skip, on one side of the longitudinal centreline thereof.

The mixing drum 3 is rotatable about a horizontal pivot axis 43 parallel to the axis 49, by means of a handwheel 4, between a loading position, as shown, in which the open mouth of the drum 3 faces upwardly to receive material from the chute 7, and an unloading position, shown in broken outline at 3A in Figure 7, in which the open mouth of the drum 3 is inclined downwardly to discharge the contents of the drum 3 under gravity. Between the loading and unloading positions the drum 3 has an inspection position, indicated 3B, in which the open mouth of the drum 3 faces upwardly and outwardly from the skip 10.

The mixing drum 3 contains a rotary shaft 50, coaxial with the pivot axis 43, to which a number of mixing vanes 51 are fixed. The shaft 50 is driven by a motor 52 housed at the one end of the skip 10 on the opposite side of the longitudinal centreline from the mixing drum 3. The motor 52, which in this example comprises a two-stroke petrol engine, drives the mixer shaft 50 through a reduction gearbox 53. In a typical example a motor speed of 3000 r.p.m. would be reduced to a shaft speed of 37.5 r.p.m. The motor 52 also drives the chain drive sprockets 48 of the scoop conveyor through a chain and sprocket drive 54.

The open mouth of the mixer drum 3 is covered by a wire mesh grid 55 through which material discharged from the skip 10 may pass. A fixed protective cage 56 covers the skip 10 itself and the scoop conveyor, both as a safety measure and to prevent the skip 10 being used as a receptacle for unauthorised material other than the material for which the skip is intended.

The pivoted support arm 47 has a lost motion connection to the mixer drum 3 in the form of a chain 57 one end of which is connected to the arm 47 below its pivot axis 49 and the other end of which is connected to an anchor pin 58 which is slidable along a slot 59 in a side wall of the drum 3. When the drum 3 is in its loading position, as shown, which is also the position of the drum 3 in which mixing is carried out, the chain 57 allows the arm 47 to pivot freely about its pivot axis 49 and to rest under its own weight on the surface of the material 11 in the skip 10. When the drum 3 is rotated into its inspection position 3B, the chain 57 lifts the arm 47 clear of the material in the skip, to the position shown in broken outline at 47B, allowing any material held in the scoops 12 to fall back into the skip 10. Further rotation of the drum 3 into its unloading position 3A causes the chain anchor pin 58 to travel along the slot 59 without affecting the position of the arm 47, which remains raised.

The discharge chute 7 is pivotally mounted on the support structure 6 about a pivot axis 7A and is counterweighted so that it can be swung out of the way when the conveyor support arm 47 is lifted into its inspection position 47B.

At its end opposite the mixer drum 3 the skip 10 is provided with a compartment 60, accessible by way of a hinged lid 61, in which cement for use in making concrete in the mixing drum 3 may be stored in dry conditions.

- 18 -

0170735

CLAIMS

1.   A skip discharge unit for discharging material from a vehicle-transportable skip, characterised in that:
the discharge unit (5) comprises a support structure (6) positioned adjacent one end of the skip (10), a support arm (13) projecting from the support, and a power-driven conveyor or scoop device (12) carried by the arm and operative to displace material towards the said one end of the skip (10) and to discharge the material from the skip at said one end.

2.   A unit according to Claim 1, characterised in that the support arm (13) is pivoted about a horizontal axis on the support structure (6) at the said one end of the skip.

3.   A unit according to Claim 2, characterised in that the power-driven conveyor or scoop device comprises an endless conveyor (45) carried by the pivoted arm and passing around an idle pulley (46) at the free end of the arm, the conveyor being provided with scoops or buckets (12) which are driven around an endless path in operation of the conveyor, the arm resting under its own weight on material on the skip so that the inclination of the arm to the horizontal is determined by the level of the material in the skip.

4.   A unit according to Claim 1 or Claim 3, characterised in that the conveyor or scoop device discharges into a mixer drum (3) carried by the support structure at  the said one end of the skip (10).

5.  A unit according to Claim 4, in which the mixer
drum (3) is rotatable about a horizontal axis
(43) between a loading position in which the drum
receives material discharged from the skip and
an unloading position (3A) in which the contents
of the drum are discharged under gravity, characterised
in that the mixer drum is connected by a chain
(57) cable or linkage to the pivoted arm (47) so
that, when the drum is moved into its unloading
position it causes the support arm to be lifted
into an inoperative position (47B) clear of the
material in the skip, allowing material carried
by the conveyor to fall back into the skip (10).

6.  A unit according to Claim 5, characterised in
that the mixer drum has an inspection position (3B)
intermediate its loading and unloading positions,
the movement of the drum between the loading and
inspection positions causing the support arm (47)
to be lifted into its inoperative position (47B) and
the chain, cable or linkage including lost motion
means such that movement of the mixer drum between
the inspection and unloading positions does not
cause any movement of the support arm from its
inoperative position.

7.  A unit according to any one of Claims 4 to 6,
characterised in that the mixer drum (3) and the
support structure are permanently attached to the
skip, and a grid (56) extends over the top of the
skip and the conveyor or scoop device.

8.  A unit according to Claim 8, in which the
skip is intended to contain aggregate material
for concrete-making, and is further provided
with a storage compartment (60) for cement at the end of the skip opposite the said one end.

9. A unit according to any on of Claims 4 to 8, characterised in that a motor (52) is carried by the support structure (6) and drives both a mixer rotor (50, 51) located in the drum (3) and the conveyor (45).

10. A skip discharge unit for discharging material from a vehicle-transportable skip,

characterised in that:

the discharge unit (5) comprises a support structure (6) positioned adjacent on end of the skip (10), a drag scoop device (12,13) carried by the support structure power-operated means (15) operable to drive the scoop device to displace material towards the said one end of the skip and to discharge the material from the skip, the power-operated means (15) being further operable to return the drag scoop (12) to a starting position at the opposite end of the skip (10) from the support sturcture (6).

11. A unit according to Claim 10, characterised in that the drag scoop (12) or its power-operated means (15) are so arranged that the scoop (12) is clear of working engagement with material (11) in the skip (10) during the return movement of the scoop (12) to the starting position.

12. A unit according to Claim 11, in which the drag scoop device includes an extendable arm (13) one end of which carries the drag scoop (12) and the other end of which is pivotally connected to said support structure (6), the power-operated means including a first actuator (15) for
selectively extending and contracting the arm
(13) and a second actuator (20) for selectively
raising the arm, the change in length of the
arm (13) between its fully contracted and fully
extended conditions being approximately equal
to the length of the skip (10) to be discharged.

13. A unit accordding to Claim 12, characterised
in that the extendable arm (13) comprises an
extendable linkage system (14) such as a
lazytongs linkage.

14. A unit according to Claim 10, Claim 11 or
Claim 12, characterised in that the drag scoop (12)
is provided with surface-riding skids (28)
effective to prevent the drag scoop from burying
itself in the material as it is drawn through
the latter.

15. A unit according to any one of Claims 10 to
12, characterised in that the drag scoop (12)
is provided with guide rollers (41) or wheels on
opposite lateral ends of the scoop for rolling
on the surface of the material (11) or on the
lateral walls of the skip (10) to prevent the
drag scoop from burying itself in the material
as it is drawn through the latter.

16. A unit according to anyone of Claims 12 to 15,
characterised in that the drag scoop (12) is
pivotally attached to the extendable arm (13)
for pivotal movement about a horizontal axis,
the scoop pivoting into a downwardly projecting
operative position upon engagement with the material as the scoop is drawn through the latter
and pivoting freely into an inoperative position
upon return movement of the scoop.

17.  A unit according to any one of Claims 12 to 16,
characterised in that the arm (13) is extendable
and retractable by cables or chains (30, 31)
which are movable by means of a  double-acting
fluid-pressure actuator (40), the cables or
chains passing around a pulley system (34, 35)
which magnifies the movement of the actuator.

18.  A concrete or mortar mixer unit suitable
for loading from a skip by means of a skip
discharge unit according to any one of Claims 1
to 17, characterised in that the mixer unit
comprises  a mixing chamber (3) having a
substantially vertical loading position with its
open end uppermost and pivotable from the loading
position about a horizontal axis (43) by
actuator means (44) operable to oscillate the
chamber about the said axis, the chamber having
internal vanes (42) between which the material
to be mixed passes upon oscillation of the
chamber.

19.  A mixer unit according to Claim 18,
characterised in that the mixing chamber (3)
is of generally rectangular cross section with
its longer sides parallel to the axis (43) of
oscillation, the vanes (42) extending longitudinally
of the chamber.

20.  A mixer unit according to Claim 17 or Claim
18, characterised in that the actuator means comprise a fluid pressure actuator (44) pivotally connected to the mixing chamber (3) below the horizontal axis of oscillation (43) thereof, the actuator being so arranged that upon making an extended stroke it causes pivotal movement of the chamber about the said horizontal axis to locate the open end of the chamber lower than the closed end thereof, for discharging the mixing chamber (3).

FIG 3

FIG 2

FIG 1

1/4

0170735

FIG 4

0170735

FIG 5

42

42

42

42

3

43

44

FIG 6

3

44

FIG 7

FIG 8

0170735

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-E- 25 386 (SOLDINI) <br> * Figure 1 * | 1 | B 28 C 7/08 <br> B 65 G 65/06 <br> B 65 G 65/38 |
| A | | 4-9 | |
| | --- | | |
| Y | US-A-4 248 339 (FISCHER) <br> * Column 3, line 61 - column 4, line 3; figures * | 1 | |
| A | | 2,3 | |
| | --- | | |
| A | DE-A-2 642 588 (VÖLK) <br> * Pages 10-12; figures * | 3 | |
| | --- | | **TECHNICAL FIELDS SEARCHED (Int. Cl.4)** |
| A | GB-A- 834 483 (MASSEY) <br> * Page 1, line 66 - page 2, line 54; figures * | 10,11 | |
| | --- | | |
| A | FR-A-1 550 856 (CHIONHOCK) <br> * Whole document * | 10,11 | B 28 C <br> B 65 G <br> B 01 F |
| | --- | | |
| A | DE-C- 800 960 (SCHMIEDEL) | | |
| | --- | | |
| A | GB-A- 921 985 (MUELLER) | | |
| | --- | | |
| A | FR-A-2 493 283 (SCHAUMEIER) | | |
| | --- -/- | | |

The present search report has been drawn up for all claims

| Place of search THE HAGUE | Date of completion of the search 07-10-1985 | Examiner PEETERS S. |
|---|---|---|

| Category | Citation of document with indication, where appropriate, of relevant passages | Relevant to claim | CLASSIFICATION OF THE APPLICATION (Int. Cl.4) |
|---|---|---|---|
| A | FR-A-1 032 816  (ATLAS-DIESEL) | | |
| | --- | | |
| E | GB-A-2 131 762  (MOORE) | 1,2,10 -20 | |
| | * En entier * | | |
| | ----- | | |

## DOCUMENTS CONSIDERED TO BE RELEVANT      Page   2

**TECHNICAL FIELDS SEARCHED (Int. Cl.4)**

The present search report has been drawn up for all claims

| Place of search | Date of completion of the search | Examiner |
|---|---|---|
| THE HAGUE | 07-10-1985 | PEETERS S. |